# EUROPEAN PATENT APPLICATION

(11) **EP 2 517 544 A1**
(43) Date of publication of application: **31.10.2012**
(21) Application number: 12165897.5
(22) Date of filing: 27.04.2012
(51) Int. Cl.: A01C 5/06

(54) **Disc coulter, soil cultivation device provided with a disc coulter and method for producing a disc coulter**

(30) Priority: 29.04.2011 NL 2006694
(71) Applicant: Veenhuis Machines B.V., NL-8102 HE Raalte (NL)
(72) Inventor: Dokter, Hendrik Gerrit, 7437 XP BATHMEN (NL)
(74) Representative: Algemeen Octrooi- en Merkenbureau

(57) **Abstract**

The invention relates to a disc coulter (1) comprising a central disc (2) which is provided with a side disc (3,4) on either side, which side discs are at least substantially made of plastic material. The invention further relates to a use of the disc coulter (1) and to a method for producing a disc coulter (1).

## Description

According to a first aspect, the present invention relates to a disc coulter comprising a central disc which is provided with a side disc on either side, which side discs each push the soil in which a cut is made by the central disc further aside in use.

A disc coulter is a wheel that is used in farming machines, for example as part of a manure application device, for cutting a groove in the ground in which manure can be left behind for improving the farmland. A known disc coulter comprises a central steel disc provided with through holes. A steel side disc is present on either side of the central disc. The two side discs are bolted together, with the bolts extending through the through holes in the central disc. The central disc is in particular intended for making cuts in the ground, whilst the side discs are provided in particular for subsequently pushing the soil further aside so as to make a sufficiently wide groove. The central disc of the known disc coulter therefore has a slightly larger diameter than the side discs. The disc coulters are made of steel, because disc coulters are subjected to major forces of wear in use. The central disc is made of a steel harder than that of the side discs, which achieves that the relatively heavily loaded central disc and the relatively less heavily loaded side discs will wear away as evenly as possible.

A drawback of the known disc coulter is that it is relatively difficult to handle, for example upon replacement of worn disc coulters.

Accordingly it is an object of the present invention, according to a first aspect thereof, to provide a disc coulter as described in the introductory paragraph which is easier to handle than the known disc coulter, whilst the functionality of the disc coulter is not unacceptably inferior to that of the known disc coulter. According to the present invention, said greater ease of handling is achieved in that the side discs are at least substantially made of plastic material. Because plastic is lighter than steel, the total weight of a disc coulter according to the invention is lower than that of a comparable prior art disc coulter. This makes the disc coulter easier to handle. Like the known disc coulter, the central disc may be made of steel, so that the cutting function of the disc coulter remains ensured. If a wear-resistant plastic is used as the plastic material, the functionality of the side discs can be maintained as well. The object of the invention is thus achieved.

European patent application EP 1 188 360 A1 describes a disc coulter having a central hub portion surrounded by an annular flange that terminates in a cutting edge having an arrow-shaped cross-section. The part remote from the arrowhead comprises a widened portion, which widened portion functions to control the cutting depth of the disc coulter. The widened portion may be provided in the form of a solid ring, which may be made of plastic material. Whereas the side disc of the disc coulter according to the present invention aims at further pushing aside the earth in which a cut is being made by the disc coulter, including at least part of the side disc, so as to form a sufficiently wide groove, the ring described in EP 1 188 360 A1 provides a stop which prevents the disc coulter from cutting deeper in the ground than the stop in question allows. If used correctly, the ring will remain completely above the ground, in contrast to the side disc.

German utility model DE 90 00 053 U1 describes a disc coulter as a pre-cutting wheel comprising a flat cutting disc and bulging hub covers, which abut centrally against the actual cutting disc. The angle that the hub covers make with the flat cutting disc functions to define the cutting depth in this case as well. According to the document, post-cutting wheels oriented at an angle with respect to the vertical are specially positioned behind the pre-cutting wheel for further pushing apart the earth that has been pre-cut by the flat cutting disc.

European patent application EP 0 546 974 A1 describes a disc coulter that may be configured as a central disc comprising two spherical disc parts. Although said document relates to a disc coulter that is made up of several parts, no mention is made of the possibility to use different materials for the various parts. Nor is mention made of plastic as the basic material for parts of the disc coulter.

In a preferred embodiment of the present invention, the side discs are made of nylon, more preferably of Teflon. An important property of the nylon or Teflon to be used is its high resistance against shearing forces. The side discs of a disc coulter are loaded in particular by scouring.

The side discs are preferably joined together. This makes it possible to clamp the central disc between the side discs.

If the side discs are (to be) joined together by means of mechanical connections, for example by means of bolt-nut connections, in which case the heads of the bolt and the nut are countersunk in the side discs, two separate side discs can be joined together in a manner comparable to that of the known disc coulter. In fact, side discs of the known disc coulter can be substituted for disc coulters of plastic material, if desired.

It is further conceivable for the side discs to be joined together either directly, using bonding agents, or via the central disc. If the side discs are each individually bonded to a central disc, for example by glueing, the central disc need not be provided with any through holes, with the exception of course of a through hole for a rotary shaft of the disc coulter. Through holes may nevertheless be provided for the purpose of reducing the weight of the central disc and thus of a composite disc coulter. It is also possible, however, to join the two side discs of a disc coulter together by means of bonding agents, in which case use is made of through holes in the central disc.

In a preferred embodiment of the present invention, the two side discs form one integral whole, with the central disc being clamped between the side discs. Thus, there is no need for an additional connection between a side disc and the central disc, nor is there a connection that can come loose during use of the disc coulter.

Although it is conceivable for the central disc of the disc coulter to be made of plastic material as well, it is preferable for the central disc to be made of steel. The central disc is exposed to relatively large forces exerted thereon by the soil, so that the resistance to wear of steel renders it suitable for use for the central disc.

It is preferable in that case if the central disc is provided with through holes which extend at least substantially perpendicularly to the plane of the central disc. The weight of the central disc can thus be reduced. In addition, the through holes make it possible to join two side discs which are, or at least are to be, arranged on either side.

In a preferred embodiment of the present invention, the central disc has a larger outer circumference than the side discs. In such an embodiment, the central disc will come into contact with the ground sooner than the side discs and thus start forming a cut in the ground. It is possible, however, for the side discs to have an outer circumference which is as large as or even larger than that of the central disc. The side discs will wear off in use, so that the central disc will be exposed.

The diameter of the central disc preferably ranges between 0.2 m and 0.5 m. Usually, disc coulters having such dimensions are used. The diameter of the central disc is furthermore preferably larger than 0.3 m and furthermore preferably smaller than 0.4 m.

According to a second aspect, the present invention relates to a soil cultivation device comprising a frame which is, or at least is to be, pulled by a traction vehicle, said frame comprising disc coulters aligned at least substantially parallel with the, at least intended, driving direction of the frame, which make a cut in the ground in use. Disc coulters according to the first aspect of the present invention can be used with such a soil cultivation device, such as a plough or a manure application device, according to the second aspect of the present invention. Thus, the soil cultivation device can benefit from the advantages of the improved manageability as discussed above in the description of (variants) of the disc coulters according to the first aspect of the invention. Preferably, but not necessarily, all the disc coulters of the soil cultivation machine are of the type according to the invention.

According to a third aspect, the present invention relates to a method for producing a disc coulter, comprising the steps of providing a central disc and attaching two side discs of plastic material to the central disc. Preferably, a method is used in which the step of providing two plastic side discs comprises positioning the central disc in a mould, substantially closing the mould and forming the plastic side discs around the central disc in the mould. This can for example take place by sintering, injection-moulding, or nylon casting, also known as reaction injection-moulding. An advantage of the third aspect of the present invention is the fact that the central disc is firmly clamped between the side discs due to shrinkage of the side discs after the attachment of the side discs. This does not alter the fact that plastic side discs may be attached to the central disc in a conventional manner, as is done with the known disc coulter described in the opening paragraphs.

The present invention will now be explained in more detail with reference to the appended figures, in which:
Figure 1a is a side view of a disc coulter according to the present invention;
Figure 1b is a cross-sectional view along the line A-A of the disc coulter of figure 1;
Figure 1c is a side view of a central disc of the disc coulter of figure 1a;
Figure 2 is a perspective top plan view of two mould parts for producing a preferred embodiment of a disc coulter according to the present invention;
Figure 3a is a side view of a disc holder according to the present invention formed by using the mould shown in figure 2;
Figure 3b is a cross-sectional view along the line B-B of figure 3a; and
Figure 4 is a schematic side view of a part of a manure application device comprising a disc coulter according to the present invention.

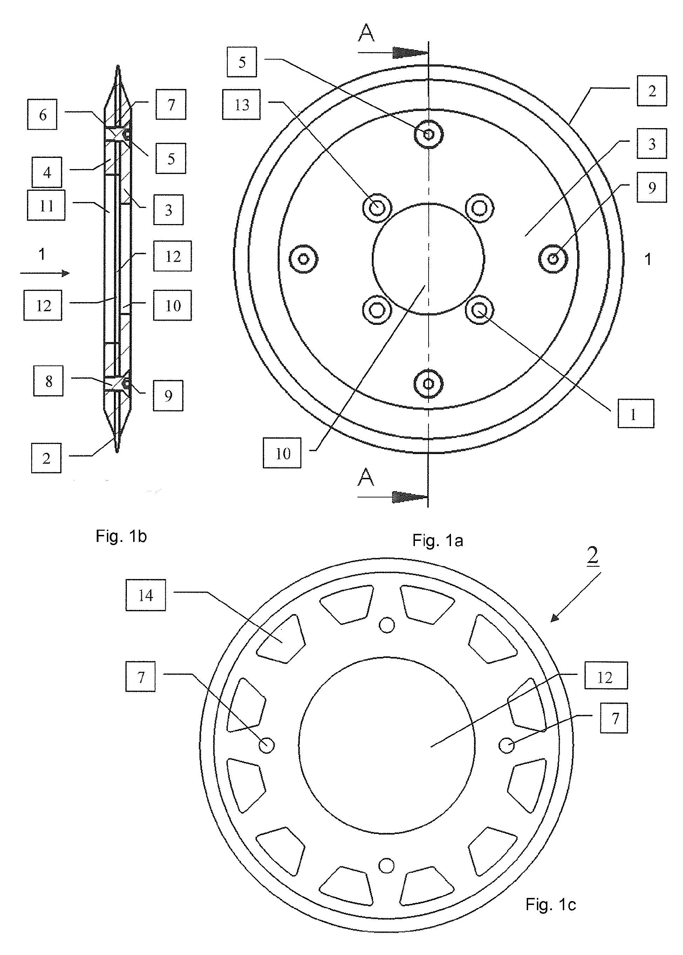

With reference to figure 1a, there is shown a side view of a disc coulter 1 according to the present invention, which has a diameter of 350 mm. Figure 1b is a cross-sectional view of the disc coulter 1 along the line A-A in figure 1a. The disc coulter is made up of a central disc 2 shown in figure 1c, which is made of hardened steel having a Rockwell hardness of, in this case, about 50 HRC. The central disc 2 is flanked by two side discs 3, 4 made of nylon, of which only the side disc 3 is shown in figure 1a. Bolts 8 extend through mutually aligned through holes 5, 6, 7 in the two side discs 3, 4 and the central disc 2, respectively, which bolts pull the side discs 3 and 4 together, using nuts 9. The central disc 2 is thus clamped between the side discs 3 and 4. Centrally provided in the side discs 3, 4 are circular holes 10 and 11, respectively, which are aligned with one central circular hole 12 in the central disc 2, so that the disc coulter 1 can be attached to a hub (not shown) in a manner which is known per se. Four through mounting holes 13 are to that end provided in the side disc 3, which holes are located near the central holes 11, 12 of the other side disc 4 and the central disc 2, respectively, in the assembled condition of the disc coulter 1. Figure 1c, to conclude, shows the central disc 2 without side discs. In figure 1c it can be observed that the central disc 2 is provided with trapezoidal holes 14 near the outer circumference, which function to reduce the weight of the central disc 2 and thus of the disc coulter 1. Apart from the material selection, this embodiment of the disc coulter 1 need not be different from known disc coulters having metal side discs.

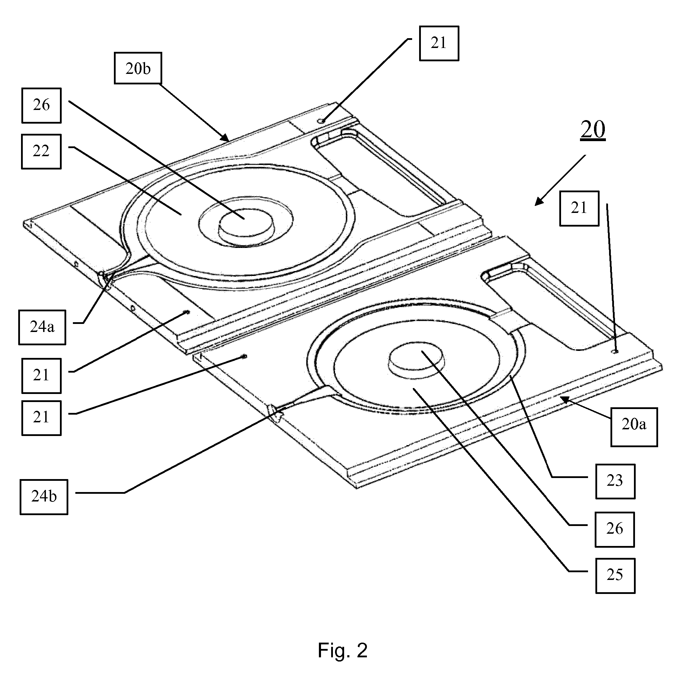

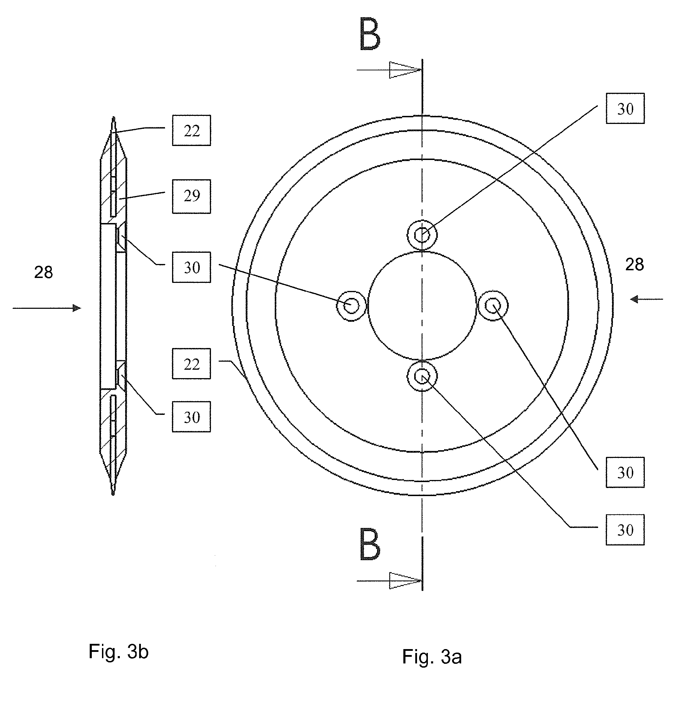

Figure 2 shows a mould 20 comprising two mould parts 20a, 20b for forming an alternative embodiment of a disc coulter according to the present invention, which will be discussed in more detail hereinafter with reference to figures 3a and 3b, in which the disc coulter is indicated at 28. The two mould halves 20a, 20b are provided with positioning means 21 in the form of through holes for correctly positioning the two mould parts 20a, 20b with respect to each other. Prior to the closing of the mould 20 by positioning the mould parts 20a, 20b with respect to each other, a steel central disc 22 was laid in the mould part 20b. The central disc 22 rests on an edge (not shown in figure 2) that corresponds to the edge 23 in the mould part 20a. When the mould 20 is closed by positioning the mould parts 20a, 20b one above the other, recesses 24a, 24b form an injection channel (24) which widens in the direction of the central disc 22 and the cavities 25 present on either side thereof. When liquid plastic is injected through the injection channel 24, liquid plastic thus flows on either side of the central disc 22 into the interconnected cavities 25, whose shape corresponds to that of an integral side disc element comprising two side discs which are connected at the inner circumferential edge. The mould parts 20a, 20b are to that end provided with elevations 26, which fill a space corresponding to a shaft hole, in such a manner that a space remains between the inner circumferential edge of the central disc 22 and the elevations 26, through which space liquid plastic flows together from both sides of the central disc 22 in use for forming an integral side disc element comprising two side discs and a connection therebetween.

Figure 3a is a side view of a disc coulter 28 formed by means of the above-described method, of which disc coulter a cross-sectional view along the line B-B is shown in figure 3b. As figures 3a, 3b show, the central disc is surrounded near the outer circumference thereof by a so-called side disc element 22 comprising two side disc parts that blend together near the inner circumference of the central disc 22. With the exception of the central, circular hole, no through holes are thus present in the central disc 22, at least in this embodiment. The side disc element comprises four through mounting holes 30, via which the disc coulter 28 can be mounted to a hub.

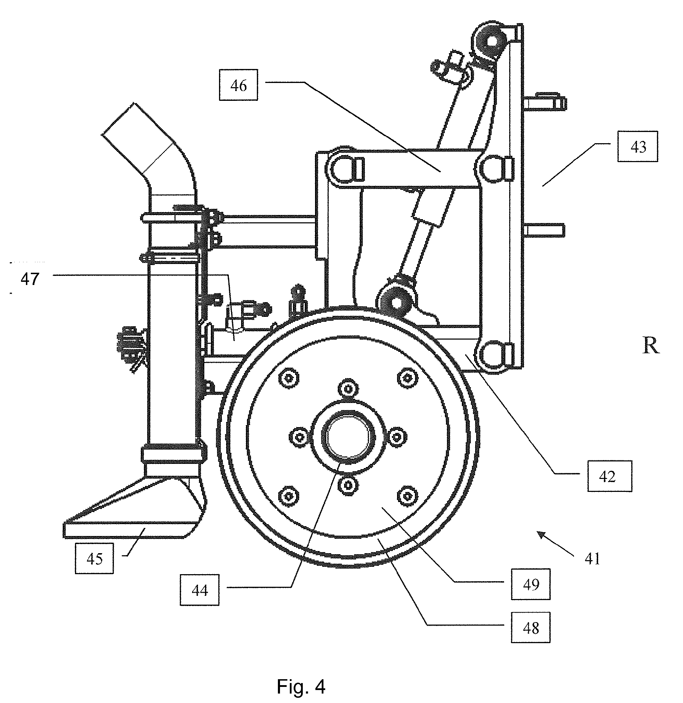

Figure 4 is a schematic side view of a disc coulter 41 forming part of a manure application device, which disc coulter comprises a central disc 48 and two side discs, only one of which (49) is shown in figure 4. The disc coulter 41 is connected to a manure vehicle (not shown) via an arm 42 and a hub 44. While the manure vehicle is being driven across the land, the disc coulter 41 cuts a groove in the ground (not shown). Behind the disc coulter 41, seen in the driving direction R, a nozzle 45 is connected to the manure vehicle via an arm 46. Manure is carried to the nozzle 45 via pipes 47 of a tank in the manure vehicle 43, so that manure can be left behind in the groove realised by the disc coulter 41 via the nozzle 45.

The present invention has been merely illustrated by means of a few embodiments in the appended figures and the above description. It will be understood, however, that several variants, which may or may not be obvious to those skilled in the art, are conceivable within the scope of the present invention as defined in the appended claims. Thus, the central disc of the disc coulter need not be made of steel. Other suitable materials of adequate hardness may be used as well. The plastic side discs need not be made of nylon or Teflon. Other plastics are conceivable as well, provided the plastic that is used can list and the scouring effect when cutting through the agricultural soil. The method for producing a disc coulter is not limited to an injection-moulding process. Other suitable processes, such as sintering, by means of which an integral side disc element can be formed in the mould with a central disc as an inlay, fall within the scope of the present invention as well. Furthermore, a side disc need not be joined to the central disc and/or another side disc by means of bolts. Also other joining methods, for example using a glue or a pop riveting technique, are possible.

## Claims

1. A disc coulter comprising a central disc which is provided with a side disc on either side, which side discs each push the soil in which a cut is made by the central disc further aside in use, **characterised in that** said side discs are at least substantially made of plastic material.

2. A disc coulter according to claim 1, **characterised in that** the side discs are made of nylon.

3. A disc coulter according to claim 1 or 2, **characterised in that** the side discs are joined together.

4. A disc coulter according to claim 3, **characterised in that** the side discs are joined together by mechanical joining means.

5. A disc coulter according to claim 3 or 4, **characterised in that** the side discs are joined together either directly, using bonding agents, or via the central disc.

6. A disc coulter according to claim 3, **characterised in that** the two side discs form one integral whole, with the central disc being clamped between the side discs.

7. A disc coulter according to one or more of the preceding claims, **characterised in that** the central disc is made of steel.

8. A disc coulter according to one or more of the preceding claims, **characterised in that** the central disc is provided with through holes which extend at least substantially perpendicularly to the plane of the central disc.

9. A disc coulter according to one or more of the preceding claims, **characterised in that** the central disc has a larger outer circumference than the side discs.

10. A disc coulter according to one or more of the preceding claims, **characterised in that** the diameter of the central disc ranges between 0.20 m and 0.50 m.

11. A soil cultivation device comprising a frame which is, or at least is to be, pulled by a traction vehicle, said frame comprising disc coulters aligned at least substantially parallel with the, at least intended, driving direction of the frame, which make a cut in the ground in use.

12. A method for producing a disc coulter, comprising the steps of:
- providing a central disc, and
- attaching two side discs of plastic material to the central disc, by positioning the central disc in a mould, substantially closing the mould and forming the plastic side discs around the central disc in the mould.

13. A method according to claim 12, **characterised in that** the side discs are formed on the central disc by sintering.

14. A method according to claim 12, **characterised in that** the side discs are formed on the central disc by injection-moulding.

15. A method according to claim 12, **characterised in that** the side discs are formed on the central disc by nylon casting.
